# DEMANDE DE BREVET EUROPEEN

(11) **EP 4 488 027 A1**
(43) Date de publication de la demande: **08.01.2025**
(21) Numéro de dépôt: 23184269.1
(22) Date de dépôt: 07.07.2023
(51) Int. Cl.: B29C 44/06, B29C 41/04, B60R 13/02, B29C 44/34, B29C 35/04

(54) **CARROSSERIE ROTOMOULEE RENFORCEE**

(71) Demandeur: Softcar SA, 1700 Fribourg (CH)
(72) Inventeur: HEISEL, Guillaume, 2503 Bienne (CH); LANDWERLIN, Stéphane, 2525 Le LANDERON (CH); VIGOUROUX, Philippe, 71370 Saint Christophe en Bresse (FR); PLUQUET, Patrick, 06190 Roquebrune Cap Martin (FR); CROZIER, Etienne, 2520 La Neuveville (CH); THULIEZ, Jean-Luc, 2525 Le LANDERON (CH)
(74) Mandataire: Grosfillier, Philippe

(57) **Abrégé**

L'invention concerne un procédé de fabrication de pièces, par exemple d'une carrosserie (01) de véhicule, ledit procédé comprenant le rotomoulage d'une couche extérieure compacte (11, 21), le rotomoulage d'une couche intérieure compacte (12, 22) et le traitement de ladite couche intérieure pour augmenter les caractéristiques mécaniques de ladite pièce.

## Description

### DOMAINE TECHNIQUE

La présente invention concerne la fabrication d'une carrosserie de véhicule à faible empreinte CO2, à faible impact écologique, et comprenant favorablement une ou plusieurs couches de polymère recyclé permettant de la renforcer, et les moyens de fabrication de celle-ci. Ces moyens et les étapes du procédé selon l'invention comprennent le rotomoulage de la couche externe de la carrosserie de préférence en une matière neuve. La présente invention concerne également des méthodes de réalisation permettant d'améliorer les caractéristiques mécaniques de la carrosserie, en utilisant par exemple de la matière issue du recyclage d'une précédente carrosserie de véhicule.

### TECHNIQUE ANTERIEURE

Depuis 1938, les véhicules sont réalisés universellement avec des châssis coques acier. Le module de l'acier est très élevé, généralement entre 190 et 220 GPa et le châssis coque une fois assemblé par soudage présente un moment quadratique optimum. Néanmoins, aujourd'hui de nombreuses problématiques se posent.

Formé à base de coke, la fabrication d'acier dans un haut fourneau génère une énorme quantité de CO2. Durant la transformation de brut d'acier en tôles au laminoir, l'énergie nécessaire et les émissions de CO2 sont également intenses. La tôle est ensuite graissée anticorrosion avant d'être roulée en bobines qui sont transportées par bateau, train et camion. La masse due à la densité de l'acier demande une énergie très importante pour le transport. Une fois arrivées à l'usine, les bobines sont stockées à l'abri des intempéries avant d'être déroulées et dégraissées. L'acier entre sur la ligne de ferrage, en estampage. Le châssis coque est constitué d'environ 350 pièces étampées, chaque pièce nécessitant la réalisation d'un outillage d'ébauche, d'un outillage de semi-finition, et d'un outillage de finition. Un changement de style nécessite un nouvel investissement sur tous ces outillages. La ligne de ferrage nécessite elle aussi un investissement en capex très important (plusieurs milliards de CHF). Finalement, l'empreinte au sol est très importante. Les presses de la ligne de ferrage consomment énormément d'énergie et sont dépendante du réseau d'approvisionnement. Une microcoupure d'électricité a des conséquences très importantes. Le travail de l'acier génère bruit, poussières, vibrations, et l'utilisation de solvants lourds. La pièce étampée est découpée de la feuille de tôle, ce qui en moyenne génère 35% de déchets. Ces déchets de tôles sont transportés aux hauts fourneaux, et ne pourront pas servir à la réalisation de tôle automobile, car elles contiennent du silicium pour être plus facilement déformable plastiquement. L'acier issue des déchets de presse sera refondu et servira donc dans des applications secondaires dégradées.

Les pièces sont transférées d'une presse à l'autre par des robots car les tôles sont coupantes, sales, et lourdes. Les tôles sont ensuite soudées ensemble par des robots pour arriver au châssis coque. Le châssis est ensuite protégé contre l'oxydation dans un bain cataphorèse. De préférence, quatre couches de protection anti-corrosion sont ensuite appliquées, avant la peinture finale thermodurcissable (non recyclable). Une fois le châssis coque réalisé, l'assemblage des fonctions intérieures lourdes, telles que les sièges et le tableau de bord, nécessite des robots ou une assistance motorisée, l'assemblage manuel du châssis coque étant très difficile du fait des masses et des trajectoires à partir des ouvertures de porte vers l'intérieur du véhicule. Au final, l'énergie utilisée sur la ligne de ferrage est difficilement compatible avec la réalisation d'un véhicule écologique et plus l'automatisation est élevée, plus la génération de CO2 est intense.

Une autre problématique fondamentale est que la densité de l'acier ne permet pas de construire des véhicules légers cohérents avec une propulsion électrique. L'allègement des structures améliore les performances des véhicules, et permet une consommation d'énergie réduite. Dans le cas d'une motorisation électrique, la légèreté devient de la performance et de l'autonomie en plus. La ligne de ferrage de tôle est bruyante, sale, poussiéreuse, et nécessite une quantité d'énergie très importante. Le capex d'une ligne est très élevé, occupe une surface au sol très importante pour enchaîner en ligne les opérations.

Les châssis coque en tôle ont en général une épaisseur de 0,8 mm et ces tôles ont le problème majeur de pouvoir être endommagée par la grêle. De plus, la corrosion reste le problème le plus important de l'automobile en acier.

On connaît le rotomoulage qui est un des premiers procédés de transformation des polymères, généralement utilisé pour réaliser des bacs (comme des réservoirs, des cuves, des vessies de réservoirs à hydrogène etc.), des kayaks, et d'autres pièces de grande dimension. Ces pièces sont peu techniques, ne nécessitent généralement pas d'avoir une résistance mécanique importante et les surfaces sont peu tendues. On utilise du polyéthylène, du polypropylène ou des polyamides qui ont des modules très faibles comparativement à l'acier : par exemple le polyéthylène a un module très faible d'environ 700 MPa.

Pour réaliser une carrosserie de véhicule, une résistance mécanique importante est requise, notamment au niveau des piliers A, des points d'ancrage des ceintures de sécurité et des portes pour protéger les passagers d'un choc latéral.

Pour les pièces chargées mécaniquement, comme par exemple les canoé kayaks, des pièces bicouches sont réalisées. Dans cette configuration, la couche extérieure de la paroi (dite "première couche" ou "peau") est de préférence fine et compacte, et la couche intérieure (dite "deuxième couche") rotomoulée peut être également compacte, ou bien moussée suivant les propriétés mécaniques recherchées.

La fusion des deux couches est effectuée lors de la même opération de chauffage du moule. Si les polymères constituants les deux couches sont compatibles chimiquement, il y a alors accrochage chimique entre les deux couches, cette cohésion étant un élément clef pour la résistance mécanique finale du sandwich réalisé.

Le moussage de la deuxième couche (couche intérieure) crée une expansion de la matière qui augmente l'épaisseur de paroi, et donc le moment quadratique de la section et la résistance mécanique de la pièce. La mousse ainsi créée possède une masse volumique plus faible que la partie compacte, mais la pièce réalisée avec moussage de la deuxième couche possède une résistance mécanique beaucoup plus importante que celle réalisée en une seule couche.

### SOMMAIRE DE L'INVENTION ET MODES D'EXECUTION DE CELLE-CI

Un but de la présente invention est d'améliorer les procédés, méthodes et produits de l'état de la technique notamment pour utiliser la matière recyclée d'une carrosserie usagée pour renforcer une nouvelle fabrication. Nous utiliserons dans la présente demande le terme « Upcycling » pour décrire cette utilisation

La présente invention permet de pallier l'ensemble des inconvénients mentionnés ci-dessus, en réalisant une carrosserie renforcée par de la matière recyclée issue d'une coque précédemment produite (dite "coque précédente"). Dans des modes d'exécution, la présente invention comprend quatre processus industriels d'augmentation du moment quadratique de la coque, produite par l'utilisation de matière recyclée d'une précédente coque, suivant ainsi les principes dénommés "upcycling" dans l'état de la technique.

La coque est moulée en une seule pièce, sans déchets à la production puisque toute la matière va intégralement dans le moule et la pièce finie, teintée directement dans la masse, inoxydable, entrant dans l'économie circulaire en circuit court par l'incorporation de polymère recyclé issu d'une précédente coque.

L'invention intègre la réalisation en rotomoulage d'une couche extérieure (dite "première couche") formée de préférence en matière neuve (mais pouvant incorporer de la matière recyclée), par exemple colorée, et une ou plusieurs couche(s) intérieure(s) de renfort en polymère recyclé (dites "deuxième couche", "troisième couche" etc.). Pour cette/ces couche(s) intérieure(s), on peut faire appel aux méthodes suivantes, décrites comme modes d'exécution non-limitatifs de la présente invention.

La première méthode de renfort en upcyling pour augmenter les caractéristiques mécaniques consiste à réaliser un moussage intégral : dans cette méthode, la matière, de préférence issue d'une précédente coque, est micronisée et introduite comme seconde couche par une "drop box" (c'est-à-dire un réservoir calorifugé monté sur le moule) pendant la rotation du moule après la réalisation de la première couche. La phase d'expansion de la seconde couche se réalise dans la section considérée. La réaction de moussage est déclenchée de préférence par un agent exothermique - exemple : OSBH ou 4,4'-oxydibenzene sulphonohydrazide (la réaction peut fonctionner également avec des agents de type endothermique) et le moussage intégral est créé par l'emballement de la réaction thermique associé à la chauffe du moule. Le moussage intégral est un renfort local dans la carrosserie par exemple dans les piliers A, B, C et/ou au niveau des points d'ancrage des ceintures, des protection crash de portes, ou des sièges de véhicule.

Dans cette méthode, l'entrée de la drop box sera de préférence sensiblement positionnée au centre du véhicule, au milieu du pavillon côté passager. Cette zone renforcée offre une grande résistance et devient alors le meilleur point d'ancrage haut des ceintures de sécurité pour les passagers avant par exemple.

La deuxième méthode pour augmenter les caractéristiques mécaniques en upcycling est la suivante : on réalise tout d'abord, en rotomoulage, la couche extérieure formée de préférence en matière neuve, par exemple colorée. La deuxième couche est formée, de préférence, de matière recyclée d'une précédente coque micronisée et mélangée avec des agents d'expansion pouvant favorablement contenir des agents nucléants.

Cette matière pour former la deuxième couche est envoyée pendant la rotation du moule par une drop box pour créer une couche moussée. Pour obtenir une troisième couche intérieure plus dense que la mousse, une grande dilatation des bulles à la surface de la deuxième couche moussée est réalisée. Toujours durant la phase de chauffage, de l'air chaud est injecté à l'intérieur de la pièce rotomoulée bicouches à une température supérieure à la température de ramollissement ou de fusion du polymère. Suivant la localisation du ou des point(s) d'injection du gaz chaud, il est possible de réaliser localement ou complètement une troisième couche (dite "peau") de polymère compacte, la surface de la deuxième couche moussée.

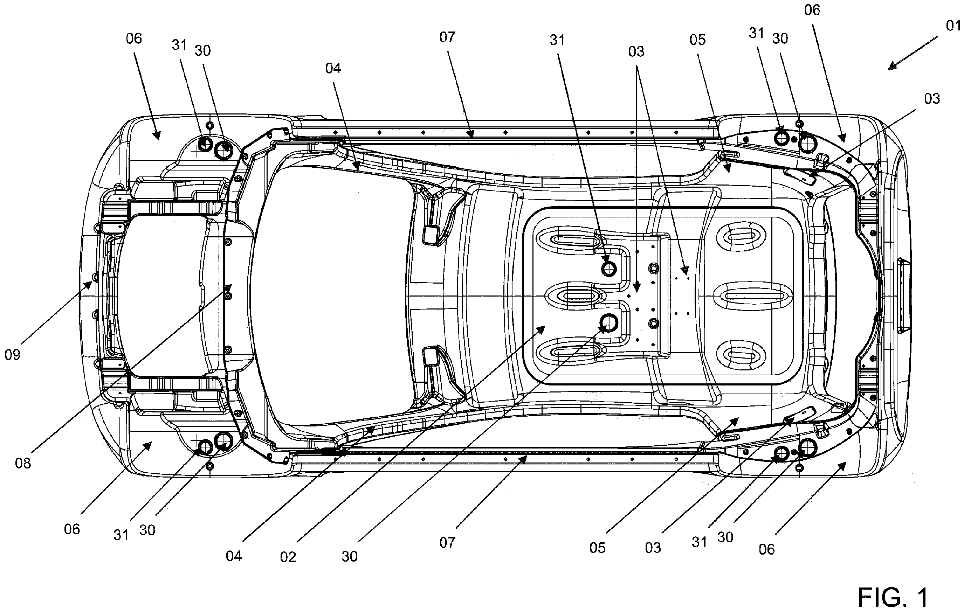

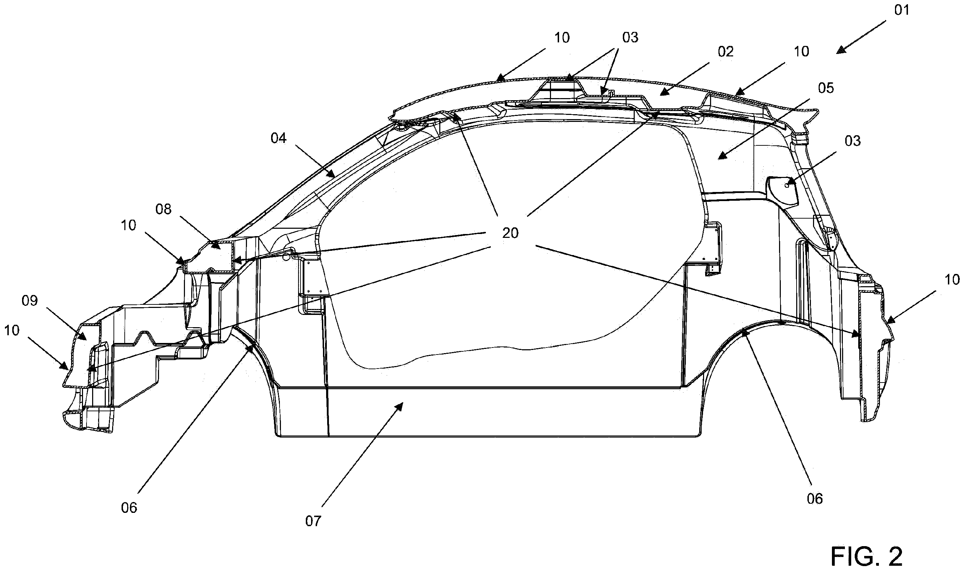

Plus précisément : à la fin de l'expansion de la couche moussée (c'est-à-dire la deuxième couche réalisée), la troisième couche est créée par l'envoi d'un flux d'air chaud dans la cavité du moule situé de manière préférentielle au centre du moule au milieu du pavillon côté intérieur. Une circulation d'air chaud préférentielle est réalisée par des évents comme représenté sur les figures 1 et 2.

Cette augmentation de température provoque la dilatation des bulles en surface de la deuxième couche. Les bulles éclatent sous l'action de la température, la matière retombe sur la mousse tout en créant la peau (soit ladite troisième couche). La dilatation est obtenue après que la phase programmée d'expansion se soit achevée.

La pièce possède ainsi une couche compacte externe (première couche) provenant du rotomoulage bicouches, une couche compacte interne provenant de l'injection du gaz chaud (dilatation des bulles de la couche externe de la mousse, troisième couche), et une couche moussée médiane (intermédiaire, deuxième couche) provenant du rotomoulage bicouches. La pièce a donc une masse similaire à celle d'une pièce bicouches, mais avec une couche compacte intérieure fermant le sandwich en augmentant fortement son moment quadratique. Ce système permet d'augmenter les caractéristiques mécaniques localement ou sur toute la carrosserie, ceci dans le même encombrement de pièce et sans augmenter la masse de ladite pièce.

La troisième méthode de renfort par upcyling est un chauffage simultané de particules de tailles différentes - poudre et micro granulés - pour augmenter les caractéristiques mécaniques. On réalise tout d'abord en rotomoulage une couche extérieure de préférence en matière neuve, par exemple colorée. La deuxième couche est formée, de préférence, par upcycling de matière recyclée d'une précédente coque qui aura été reformulée puis micronisée.

Les deuxième et troisième couches sont réalisées suivant deux spectres granulométriques différents. La première poudre, chargée en agents d'expansion, a une granulométrie fine (par exemple les particules vont de 150 µm à 550 µm suivant une répartition particulière) et permettra de réaliser la deuxième couche (moussée). La seconde poudre a une granulométrie supérieure à la première (par exemple les particules vont de 500 µm à 750 µm suivant une répartition particulière et suivant un spectre granulométrique étroit) et permettra de réaliser la troisième couche (compacte).

La première couche externe de la pièce est réalisée de préférence en matière vierge. Les deuxième et troisième couches intérieures sont envoyées dans le moule de préférence en même temps via une drop-box qui contient le mélange des 2 granulométries en matières recyclées. Les particules les plus fines fondent en premier, ainsi la poudre chargée d'agent d'expansion se dépose sur la première couche de matière vierge, formant une deuxième couche, puis les particules plus grosses viennent adhérer sur la deuxième couche (qui n'a pas encore réagi) formant une troisième couche. La température continuant à augmenter dans le moule, celle-ci déclenche l'expansion de la deuxième couche précédemment recouverte par la troisième couche. Le résultat est une structure "sandwich" tricouches. Ce renfort sera réalisé favorablement dans toute la pièce.

Il est possible de réaliser l'expansion de la seconde couche avant le dépôt de la troisième, en utilisant des agents d'expansion ayant une température de déclenchement inférieure.

La quatrième méthode pour améliorer les caractéristiques mécaniques est la suivante : on réalise tout d'abord en rotomoulage la couche extérieure formée de préférence en matière neuve, par exemple colorée. La matière de la deuxième couche est formée, de préférence, de matière recyclée d'une précédente coque micronisée et reformulée. Lors de cette opération de reformulation, il est possible d'intégrer à la matière recyclée des charges nanométriques ayant pour but d'améliorer la résistance mécanique comme des nano tubes, du Graphène par exemple ou d'autres matières de renfort équivalentes. On peut aussi, pour assurer la traçabilité de la matière recyclée, introduire des traceurs nanométriques afin de garantir la provenance et la qualité de la matière recyclée.

La première couche externe de la pièce est réalisée de préférence en matière vierge. La deuxième couche intérieure est envoyée dans le moule via une trémie qui contient le mélange de poudre recyclées avec les additifs décrits ci-dessus. Ce renfort peut être réalisé localement ou dans toute la pièce.

Ces quatre méthodes permettent d'augmenter les caractéristiques mécaniques des pièces produites, dans le même encombrement de pièce et sans augmenter la masse de ladite pièce.

Au moyen des méthodes et procédés décrits ci-dessus, on obtient des coques possédant les caractéristiques requises pour leur usage, par exemple comme carrosseries de véhicules.

Dans des modes d'exécution, on peut ajouter des renforts locaux, notamment aux endroits dont la résistance doit être importante et/ou dans les endroits où les sections de matière sont limitées, par exemple au niveau des piliers A dont la largeur est limitée pour que le conducteur puisse conserver un bon angle de vision et bien voir la route sur les côtés. L'invention permet de renforcer la rigidité selon l'une des quatre méthodes décrites ci-dessus (moussage intégral de la section, ajout d'une troisième couche par chauffage de la mousse, ajout d'une troisième couche en jouant sur la granulométrie de la matière brut et/ou ajout de charges nanométriques dans la matière brute).

Les points d'ancrage des ceintures de sécurité des passager avant, qui seront favorablement situés au milieu du véhicule, seront également fortement sollicités en particulier lors d'éventuels crashs. L'invention permet de rigidifier tout le toit sur lequel les points d'encrage sont situés. Cette rigidification pourra se faire selon l'une des quatre méthodes décrites ci-dessus (moussage intégral de la section, ajout d'une troisième couche par chauffage de la mousse, ajout d'une troisième couche en jouant sur la granulométrie de la matière brut et/ou ajout de charges nanométriques dans la matière brut).

Les mêmes méthodes de renfort peuvent s'appliquer aux portes rotomoulées, pour résister aux chocs latéraux, aux pare-chocs avant et arrière pour résister aux chocs frontaux et arrière, aux points d'ancrage des ceintures arrière pour supporter les efforts de crash, au pilier C pour résister en cas de retournement du véhicule, ou à tout autre zone fortement sollicitée.

Un autre moyen de rigidifier localement est de réaliser des plots de recollement de matière, également dénommés "kiss-off" dans le domaine du rotomoulage. Dans le cas où ces kiss off sont réalisés directement dans la première couche externe, en raison du retrait de la matière lors de son refroidissement, des retassures apparaissent sur la surface extérieure de la première couche, ce qui n'est pas le niveau de qualité souhaité pour l'automobile. Afin de surmonter ce problème, le recollement de matière est réalisé avec la deuxième couche et/ou la troisième couche ce qui évite la formation de creux sur la surface externe de la pièce concernée. Plus précisément, on forme lesdits kiss off en réalisant des bossages sur les moules de rotomoulage des objets formés (par exemple carrosserie ou porte). Lors du rotomoulage de la première couche (externe), il n'y a pas de recollement de matière. Le recollement de matière est réalisé lors de la formation de la deuxième couche (moussée) et/ou de la troisième couche, comme décrit ci-dessus. On obtient alors des pièces considérablement renforcées qui remplissent les conditions de résistance en crash nécessaire à la réalisation d'une coque de voiture automobile.

Ces kiss-off de renforts sont réalisés favorablement dans les zones les plus chargées mécaniquement des pièces, par exemple au niveau des points d'ancrage des ceintures avant et arrière, sur les piliers A, sur les piliers C, sur le toit, sur les parechocs avant et arrière, ou sur tout autre zone sollicitée mécaniquement. Ils permettent une protection des passagers en cas de crash latéral, frontal ou arrière, en cas de retournement. Sur les portes, ils peuvent être situés au point de hanche favorablement au niveau des vide poche caché par ceux-ci, ou au niveau des épaules des passagers.

La matière issue d'un re-broyage d'une carrosserie et des panneaux de carrosserie a une valeur économique d'autant plus élevée si elle est ré - additivée et micronisée selon un spectre défini. Elle peut être revendue sur le marché pour fabriquer d'autres pièces industrielles et donner une valeur économique suffisamment incitative pour que l'utilisateur boucle le recyclage.

Dans des modes d'exécution, l'invention concerne un procédé de fabrication de pièces, par exemple d'une carrosserie de véhicule, ledit procédé comprenant le rotomoulage d'une couche extérieure compacte, le rotomoulage d'une couche intérieure compacte et le traitement de la couche intérieure pour augmenter les caractéristiques mécaniques de la pièce.

Dans des modes d'exécution, au moins une des couches est formée, en partie ou en totalité, à partir de matières recyclées et micronisées d'une carrosserie précédente.

Dans des modes d'exécution, le traitement de la couche intérieure comprend le moussage d'au moins la couche intérieure compacte pour obtenir une couche intérieure moussée.

Dans des modes d'exécution, le traitement comprend localement le moussage de la totalité de l'épaisseur de la pièce.

Dans des modes d'exécution, on effectue un chauffage d'au moins la couche intérieure moussée pour obtenir une couche intérieure compacte et une couche médiane moussée.

Dans des modes d'exécution, le chauffage de la ou des couche(s) intérieure(s) moussée(s) est réalisé par l'injection et/ou la circulation d'un gaz chaud, par exemple de l'air ou autre équivalent, à l'intérieur de ladite carrosserie.

Dans des modes d'exécution, la surface moussée sert ensuite de guide au gaz chaud par effet coanda.

Dans des modes d'exécution, des dropbox et/ou des évents sont utilisés pour réaliser les entrées et/ou sorties de gaz chaud.

Dans des modes d'exécution, lors de la micronisation d'une précédente carrosserie, celle-ci est réalisé avec au moins deux spectres de granulométries différentes et introduite dans le moule par une drop box pour réaliser la deuxième couche moussée et une troisième couche.

Dans des modes d'exécution, un premier spectre granulométrique est de préférence fin et un deuxième spectre granulométrique est supérieur au premier spectre.

Dans des modes d'exécution, les particules des deux spectres sont envoyées dans le moule, les particules les plus fines fondent en premier formant une deuxième couche sur la première couche, puis les particules plus grosses viennent adhérer sur la deuxième couche formant une troisième couche.

Dans des modes d'exécution, l'expansion de la seconde couche est réalisée avant le dépôt de la troisième couche en utilisant des agents d'expansion ayant une faible température de déclenchement.

Dans des modes d'exécution, lors du recyclage d'une coque précédente, on effectue un broyage, une reformulation, puis une micronisation dans laquelle sont intégrées des charges nanométriques type nano tubes, graphène améliorant les caractéristiques mécaniques de la deuxième couche moussée et de la troisième couche.

Dans des modes d'exécution, on forme lors du rotomoulage un plot sur la couche extérieure compacte, ledit plot ou (dit « kiss off ») permettant un recollement des matières lors du traitement de ladite couche intérieure.

Dans des modes d'exécution, l'invention concerne une pièce réalisée par un procédé de fabrication tel que décrit dans la présente demande.

Dans des modes d'exécution, la pièce est une carrosserie du véhicule ou une partie de carrosserie comme par exemple une porte ou autre.

Dans des modes d'exécution, la carrosserie est réalisée en trois couches au niveau des points d'ancrage de ceinture, et/ou du pilier A, et/ou du pilier C.

Dans des modes d'exécution, la pièce comprend au moins un plot de recollement de matière.

Dans des modes d'exécution, la pièce est une porte, un battant, un siège ou un capot et est réalisée en trois couches.

Dans des modes d'exécution, l'invention concerne un véhicule comprenant une pièce ou une carrosserie telles que décrites dans la présente demande.

Dans des modes d'exécution, le véhicule comprend des points d'ancrage des ceintures de sécurité qui sont situés au centre du pavillon, côté intérieur du véhicule.

### DESCRIPTION SOMMAIRE DES DESSINS

La présente invention et ses avantages apparaîtront mieux dans la description ci-dessous de modes de réalisation donnés à titre d'exemples non limitatifs, en référence aux dessins annexés dans lesquels :
- la figure 1 représente une vue de dessous de la carrosserie rotomoulé d'un véhicule fabriquée selon des modes d'exécution de l'invention;
- la figure 2 représente une vue en coupe de la carrosserie rotomoulé d'un véhicule fabriquée selon des modes d'exécution de l'invention;
- la figure 3 représente une vue en coupe d'une paroi du véhicule après rotomoulage des deux couches, où la couche intérieure peut être du recyclé d'une précédente carrosserie (ou coque) selon des modes d'exécution de l'invention;
- la figure 4 représente une vue en coupe d'une paroi du véhicule après moussage de la couche intérieure selon des modes d'exécution de l'invention;
- la figure 5 représente une vue en coupe d'une paroi du véhicule après formation de la troisième couche intérieure selon des modes d'exécution de l'invention;
- la figure 6 représente une vue en coupe d'une paroi du véhicule complètement moussée selon des modes d'exécution de l'invention;
- Les figures 7 à 9 illustrent des fixations/points d'ancrage de ceintures de sécurité selon des modes d'exécution de l'invention;
- Les figures 10 à 13 illustrent des modes d'exécution de kiss off (ou plots de recollement de matière) sur les pièces, servant à renforcer la structure.

### REFERENCES NUMERIQUES DES ELEMENTS

- 01 : carrosserie
- 02 : toit
- 03 : points d'ancrage de ceinture
- 04 : pilier A
- 05 : pilier C
- 06 : passage de roue
- 07 : bas de caisse
- 08 : bas de pare-brise
- 09 : pare-chocs
- 10 : paroi carrosserie
- 11 : couche extérieure compacte
- 12 : couche intérieure compacte
- 13 : couche intérieure moussée
- 14 : couche intérieure compacte
- 15 : couche médiane moussée
- 20 : paroi habitacle
- 21 : couche extérieure compacte
- 22 : couche intérieure compacte
- 23 : couche intérieure moussée
- 24 : couche intérieure compacte
- 25 : couche médiane moussée
- 30 : dropbox
- 31 : évent
- 32 : ceintures de sécurité
- 33 : plot de recollement des couches ("kiss-off")
- 34 : jointure de matière
- 35 : forme de la couche 21 pour créer le kiss-off

### DESCRIPTION DÉTAILLÉE DE MODES D'EXÉCUTION DE L'INVENTION

L'invention ne se limite pas aux formes de réalisation ou modes d'exécution décrits, mais est susceptible d'être modifiée en faisant appel à des moyens équivalents à ceux décrits. L'invention et son principe concernent donc à la fois une carrosserie de véhicule (ou une partie de celle-ci), et un procédé de fabrication de ladite carrosserie ou de parties de celle-ci.

En référence aux figures, la carrosserie 01, donnée à titre d'exemple non limitatif, est conçue pour pouvoir être rotomoulée. A ce titre, elle possède un corps creux délimité par une paroi carrosserie 10 et une paroi habitacle 20. Elle est munie de points d'entrée de la matière polymère par exemple des dropbox 30, et des points de sortie de l'air, par exemple des évents 31. Les dropbox 30 et les évents 31 sont des éléments présents sur les moules de fabrication de ladite carrosserie 01 plutôt que des éléments de ladite carrosserie 01 elle-même, mais ces points d'entrée et de sortie seront nommés ainsi sur les figures et dans la présente description, pour correspondre au vocabulaire couramment utilisé par les hommes du métier. Favorablement, lesdits dropbox 30 et évents 31 sont positionnés dans le toit 02 et dans les passages de roue 06 de ladite carrosserie 01. Ils peuvent cependant être placés à n'importe quel autre endroit de la carrosserie 01.

La fabrication de ladite carrosserie 01 selon la présente invention est réalisée en plusieurs phases successives décrites ci-après : une phase de rotomoulage de la couche extérieure et ensuite la réalisation de la ou des couches intérieures selon les méthodes décrites ci-dessous.

Phase de rotomoulage de la couche extérieure 11 : du polymère sous forme de poudre ou de pellets par exemple est inséré dans un moule de rotomoulage soit versé directement dans la cavité du moule ouvert, soit versé dans le moule fermé en passant par lesdites dropbox 30. Le moule est chauffé est entraîné en rotation sur deux axes pour que le polymère devienne pâteux ou liquide et tapisse toutes les parois dudit moule. Cette phase forme la couche extérieure compacte 11 de ladite paroi carrosserie 10 et la couche extérieure compacte 21 de ladite paroi habitacle 20. Ces couches sont dites compactes car elles ne contiennent pas ou peu de porosité et leurs propriétés physiques et mécaniques correspondent à celles des matières (par exemple du polymère) les constituant.

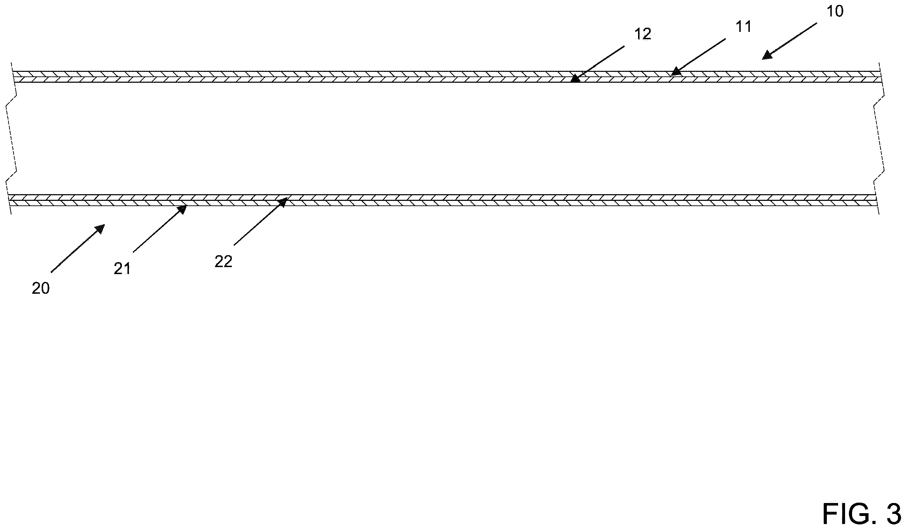

Phase de rotomoulage de la couche intérieure : du polymère sous forme de poudre matière vierge ou issu du recyclage, additionné à un agent d'expansion couplé ou non à un agent nucléant, est inséré dans le moule de rotomoulage fermé en passant par lesdites dropbox 30. Le moule est chauffé et entraîné en rotation pour que le polymère devienne pâteux ou liquide et recouvre lesdites couches extérieures compactes 11 et 21 desdites paroi carrosserie 10 et habitacle 20. La température de chauffage du moule est réglée pour être inférieure à la température de décomposition de l'agent d'expansion. Cette phase forme la couche intérieure compacte 12 de ladite paroi carrosserie 10 et la couche intérieure compacte 22 de ladite paroi habitacle 20 comme illustré en figure 3. Ces couches sont dites compactes car elles ne contiennent pas ou peu de porosité et leurs propriétés physiques et mécaniques correspondent à celles du polymère les constituant.

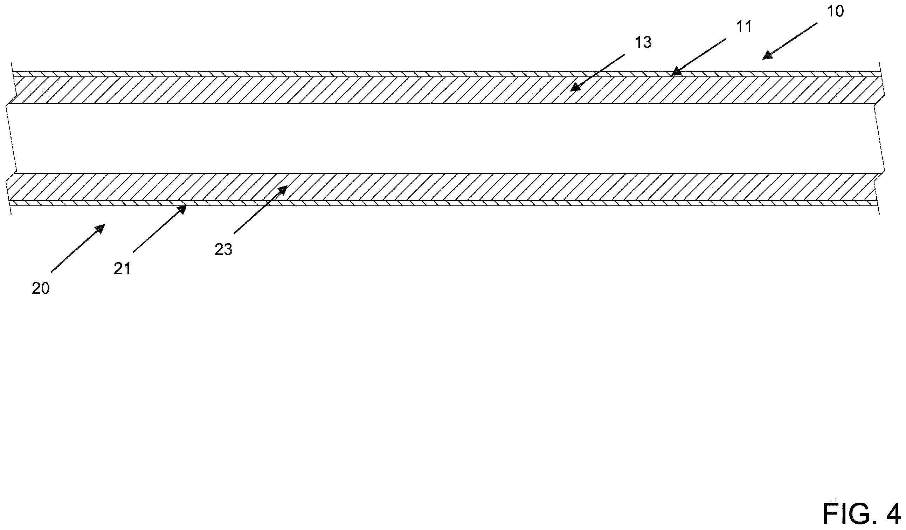

Phase de moussage de la couche intérieure : la température de chauffage du moule est augmentée jusqu'à atteindre la plage de températures de décomposition de l'agent moussant intégré au polymère desdites couches intérieures compactes 12 et 22 desdites parois carrosserie 10 et habitacle 20. L'agent d'expansion déclenche la germination puis l'expansion d'une bulle de gaz (de préférence de l'azote), son volume se dilate, ce qui créé des porosités dans le polymère et augmente l'épaisseur des parois internes. Lesdites couche intérieures compactes 12 et 22 desdites paroi carrosserie 10 et habitacle 20 se transforment pour former la couche intérieure moussée 13 de ladite paroi carrosserie 10 et la couche intérieure moussée 23 de ladite paroi habitacle 20 comme illustré en figure 4. Ces couches sont dites moussées car elles sont formées de cellules de polymère formant des poches de gaz. Leurs épaisseurs sont supérieures à celle qu'elles avaient lorsqu'elles étaient compactes. Leurs propriétés mécaniques et physiques sont inférieures à celles qu'elles avaient lorsqu'elles étaient compactes.

A ce stade, le processus de fabrication est le même que pour réaliser une pièce bicouches standard.

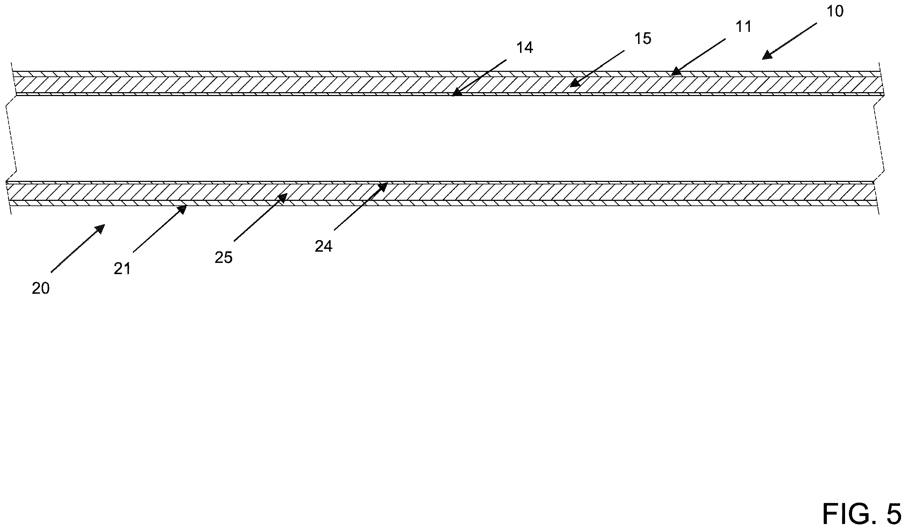

Phase de chauffage de la couche intérieure : de l'air chaud (ou tout autre gaz) est injecté dans la pièce, entre ladite couche intérieure moussée 13 de ladite paroi carrosserie 10, et ladite couche intérieure moussée 23 de ladite paroi habitacle 20. L'air circule entre un point d'entrée et un point de sortie dans la pièce. Ces points peuvent être lesdites dropbox 30 et/ou lesdits évents 31, et/ou d'autre points réalisés spécifiquement pour cette fonction. La température du gaz est supérieure à la température de décomposition de l'agent moussant. La température est suffisamment élevée pour que l'air des bulles situées en surface se dilate puis que les bulles éclatent. Il y a ensuite coalescence et une peau compacte se forme ainsi sur la couche de mousse. Ladite couche intérieure moussée 13 de ladite paroi carrosserie 10 se transforme ainsi pour former une couche intérieure compacte 14 et une couche médiane moussée 15. De la même façon, ladite couche intérieure moussée 23 de ladite paroi habitacle 20 se transforme ainsi pour former une couche intérieure compacte 24 et une couche médiane moussée 25. Cette structure est illustrée en figure 5.

Par ce procédé, on obtient ainsi une pièce tricouches (couche extérieure compacte, couche médiane moussées et couche intérieure compacte) alors que la pièce a été rotomoulée avec uniquement 2 couches de polymère.

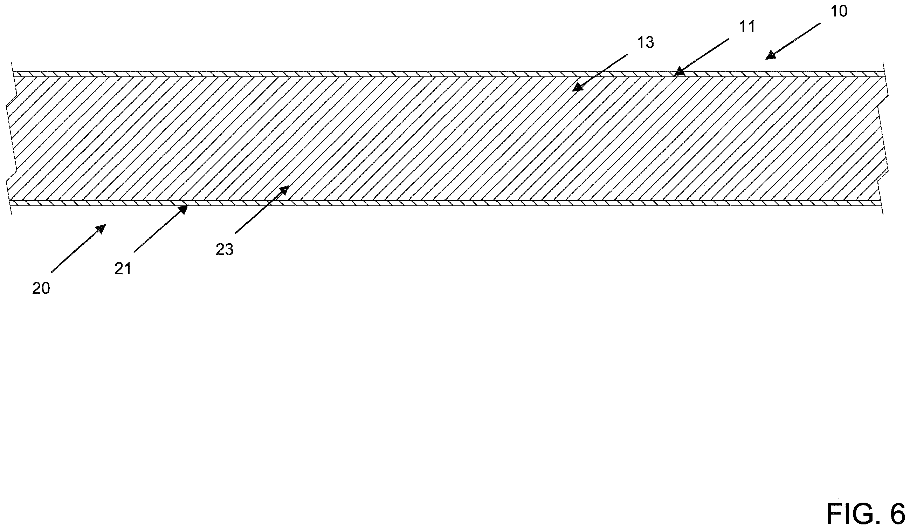

Selon un mode de réalisation particulier, certaines parties de ladite carrosserie 01 sont moussées jusqu'à ce que ladite couche intérieure moussée 13 et ladite couche intérieure moussée 23 se rejoignent, tel qu'illustré dans la figure 6. Ceci peut être réalisé par un design de pièce particulier, c'est-à-dire une épaisseur de pièce plus fine localement qui fait que les mousses se rejoignent lors de la phase de moussage. Ceci peut être réalisé en augmentant localement l'épaisseur des couches intérieures compactes. Il y a ainsi localement une plus grande quantité d'agent moussant, et donc une épaisseur de mousse plus grande à la fin de la phase de moussage. Ceci peut être réalisé en augmentant la température de moussage, par exemple localement à l'extérieur du moule, pour que la réaction exothermique de sublimation de l'agent moussant s'emballe et aboutisse à une mousse plus épaisse (mais donc moins compacte) dans la pièce.

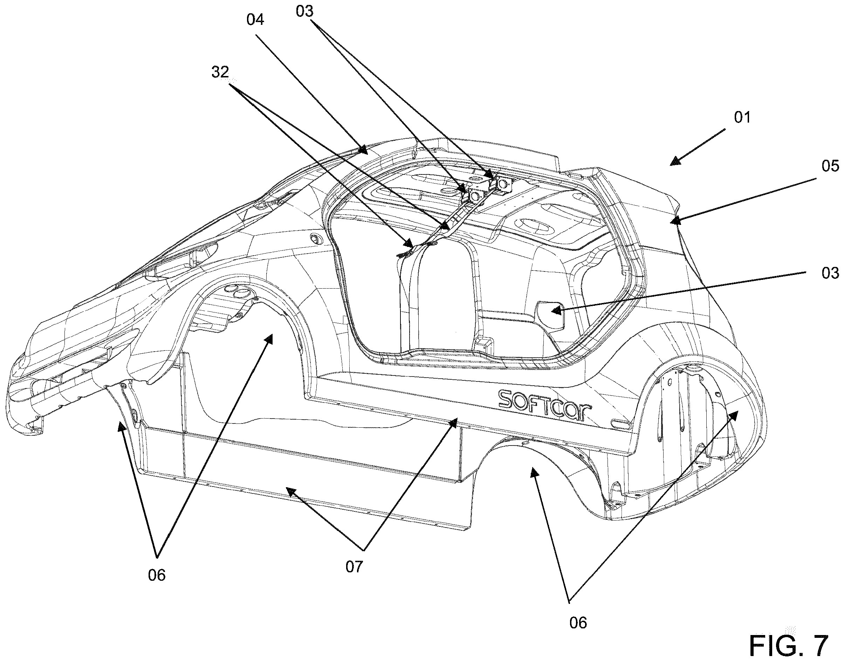

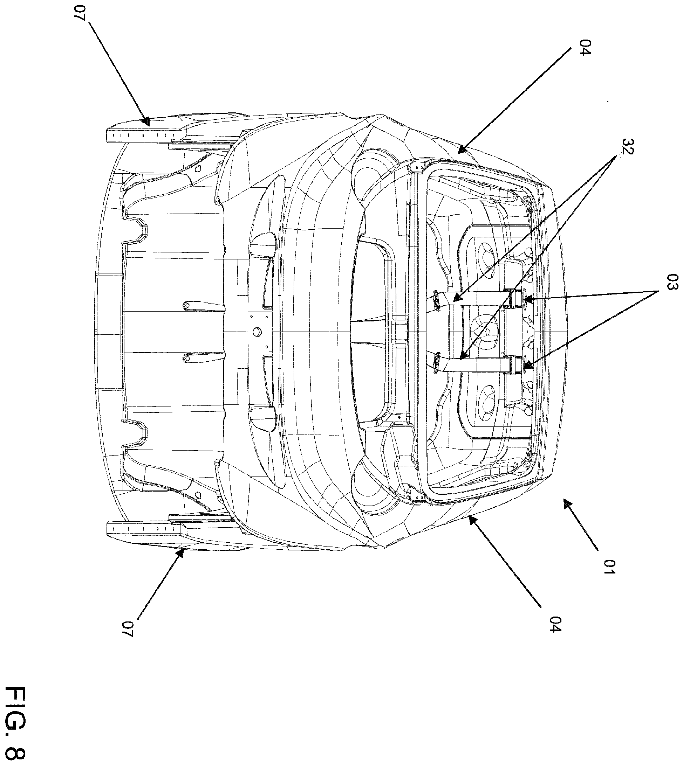

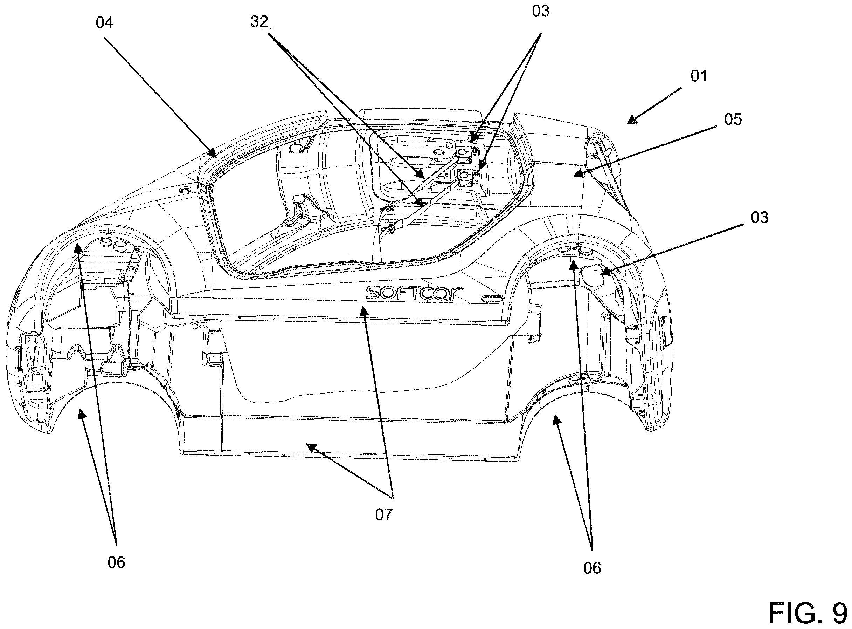

Le fait de fusionner ladite paroi carrosserie 10 et ladite paroi habitacle 20 peut avoir plusieurs avantages. Cela permet de rigidifier la pièce localement, sans recours à la troisième couche (par exemple dans des zones dans lesquelles la circulation d'un flux d'air chaud est difficilement réalisable). Cela peut également permettre de former des canaux préférentiels pour la circulation de l'air chaud lors de la phase de chauffage de la couche intérieure. Par exemple, les bas de caisse 07, le bas de pare-brise 08 et le pare-chocs 09 peuvent être intégralement moussés tel qu'illustré dans la figure 6. Lorsqu'on va ensuite injecter de l'air chaud dans ladite dropbox 30 située dans ledit passage de roue 06 à l'avant de ladite carrosserie 01, et placer la sortie d'air chaud dans ladite dropbox 30 située sur le toit, l'air passera intégralement dans le pilier A 04, réalisant la troisième couche dans cet emplacement spécifiquement. La combinaison du moussage complet de l'épaisseur par endroits et de la réalisation d'une troisième couche par circulation d'air chaud à d'autres endroit, permet de renforcer spécifiquement les zones les plus chargées mécaniquement de la ladite carrosserie 01, par exemple ledit pilier A 04, le pilier C 05, ou les points d'ancrage 03 de ceinture 32 (voir les figures 7 à 9), sans pour autant augmenter la masse de ladite carrosserie 01.

Les troisième et quatrième méthodes décrites ci-dessus peuvent également s'appliquer aux constructions illustrées dans les figures 1 à 9.

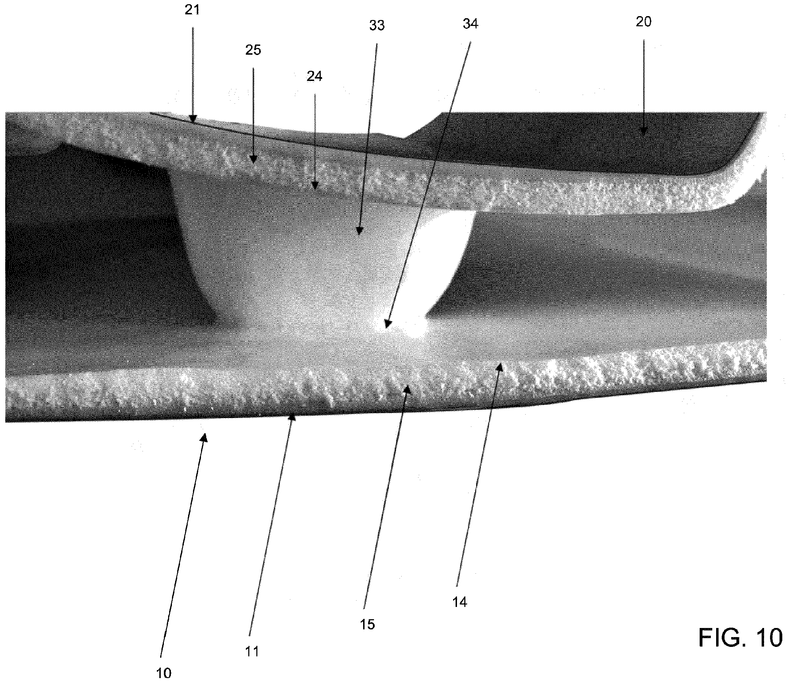

La figure 10 illustre un mode d'exécution d'un plot 33 de recollement des couches dénommé "kiss-off" dans une portière. La base du plot 33 est réalisée dans la couche 21 lors du rotomoulage de celle-ci. Le recollement de matière (illustré par la référence 34) est réalisé entre 2 couches internes, l'une appartenant à la paroi carrosserie 10, l'autre appartenant à la paroi habitacle 20. Dans la figure 10, ce sont les couches 14 et 24 qui se rejoignent mais on peut former ces kiss off avec n'importe laquelle des couches internes des modes d'exécution des figures 3 à 5 (respectivement 12/22, 13/23, 14/24), le but étant d'éviter de le faire sur les parois externes (11, 21) pour éviter d'avoir des retassures visibles depuis l'extérieur. On obtient alors des pièces considérablement renforcées qui remplissent les conditions de résistance nécessaires.

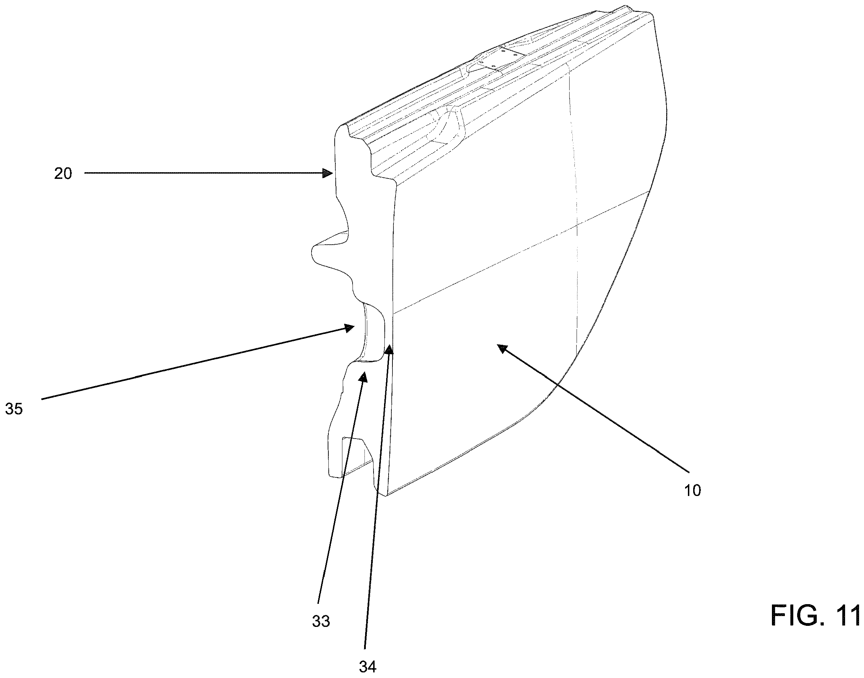

La figures 11 à 13 illustrent des modes d'exécution des kiss off 33 à différents endroits d'une carrosserie, ces modes étant illustratifs et non limitatifs, de tels kiss off pouvant être placés à d'autres endroits également.

La figure 11 illustre une vue de l'extérieur en perspective et en coupe d'une portière avec ses couches externe 10, interne 20, la forme 35 de la couche 21 pour créer le kiss-off lors du rotomoulage, et le plot de recollement des couches 33. Ledit kiss-off 33 réalise une connexion entre la paroi carrosserie 10 et la paroi habitacle 20. L'ensemble sera ainsi beaucoup plus difficile à déformer car pour déformer l'une des deux parois, il faudra également déformer l'autre en même temps alors que celle-ci sont liées par la jointure de matière 34. En cas de choc latéral, ladite portière s'enfoncera donc beaucoup moins, assurant une meilleure sécurité aux passagers.

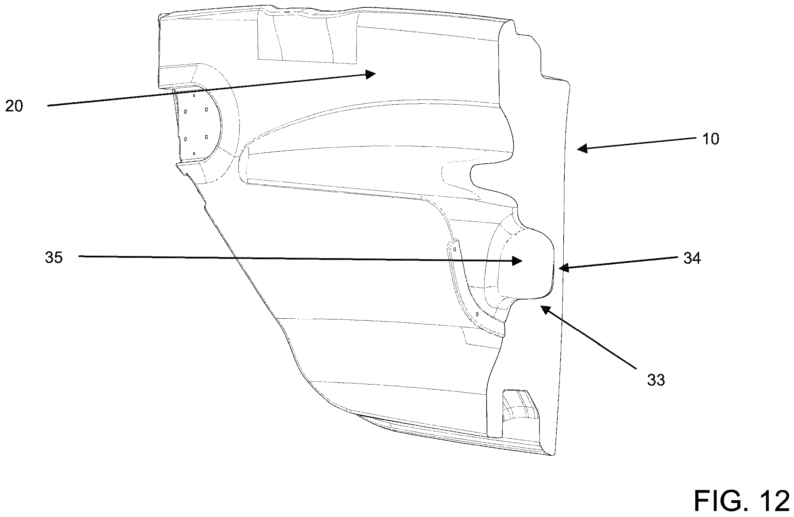

La figure 12 illustre une vue de l'intérieur en perspective et en coupe d'une portière avec ses couches externe 10, interne 20, la forme 35 de la couche 21 pour créer le kiss-off lors du rotomoulage, et le plot de recollement des couches 33.

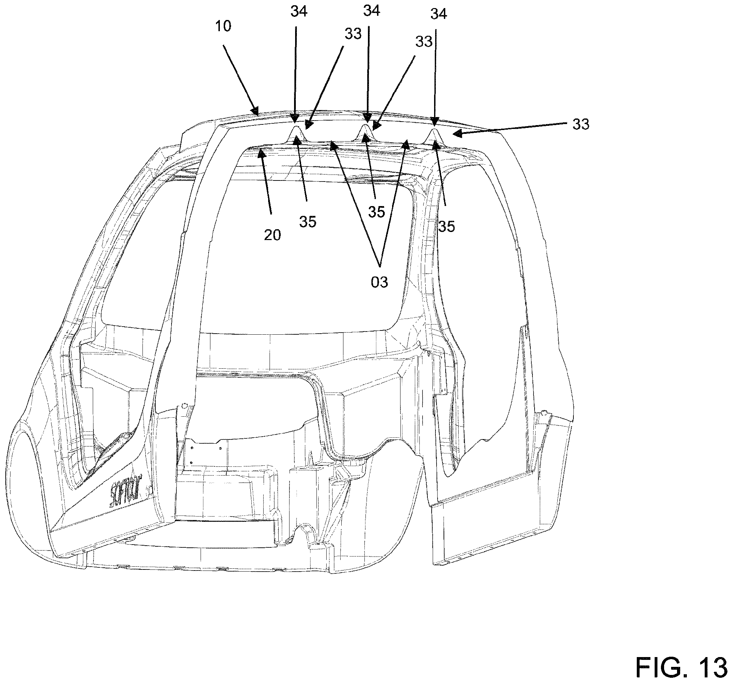

La figure 13 illustre une vue de l'arrière en perspective et en coupe de l'avant d'une carrosserie (comme illustrée dans les figures 7 à 9) avec ses couches externe 10, interne 20, la forme 35 de la couche 21 pour créer le kiss-off lors du rotomoulage, et le plot de recollement des couches 33. Dans cet exemple, les kiss off sont placés au niveau du toit et permettent de renforcer la structure au niveau des points d'ancrage des ceintures de sécurité (voir les figure 7 à 9). Ledit kiss-off 33 réalise une connexion entre la paroi carrosserie 10 et la paroi habitacle 20. L'ensemble sera ainsi beaucoup plus difficile à déformer car pour déformer l'une des deux parois, il faudra également déformer l'autre en même temps alors que celle-ci sont liées par la jointure de matière 34. En cas de choc frontal projetant le passager vers l'avant en tirant donc sur les ceintures et leurs points d'ancrage 03, lesdits point d'ancrage résisteront bien mieux à la traction desdites ceintures, assurant une meilleure sécurité aux passagers.

Les modes d'exécution ont été décrits pour fournir une compréhension globale des principes de la structure, de la fonction, de la fabrication et de l'utilisation des systèmes et procédés décrits dans la présente demande. Un ou plusieurs de ces modes de réalisation sont illustrés dans les dessins annexés. Les systèmes et procédés spécifiquement décrits dans la présente demande et illustrés dans les dessins annexés sont des modes d'exécution non limitatifs et la portée de la présente invention n'est pas définie uniquement par les revendications. Les caractéristiques illustrées ou décrites en relation avec un mode d'exécution peuvent être combinées avec les caractéristiques d'autres modes d'exécution. De telles modifications et variantes sont destinées à être incluses dans la portée de la présente invention. Un certain nombre de problèmes avec les procédés et systèmes conventionnels sont notés ici et les procédés et systèmes décrits ici peuvent résoudre un ou plusieurs de ces problèmes. De plus, alors que cette invention a été décrite conjointement avec un certain nombre de modes d'exécution, les alternatives, modifications, équivalents et variantes qui sont dans l'esprit et la portée de la présente invention sont également couvertes par la présente demande.

## Revendications

1. Procédé de fabrication de pièces, par exemple d'une carrosserie (01) de véhicule, ledit procédé comprenant le rotomoulage d'une couche extérieure compacte (11, 21), le rotomoulage d'une couche intérieure compacte (12, 22) et le traitement de ladite couche intérieure pour augmenter les caractéristiques mécaniques de ladite pièce.

2. Procédé de fabrication selon la revendication 1, dans lequel au moins une des couches est formée, en partie ou en totalité, à partir de matières recyclées et micronisées d'une carrosserie précédente.

3. Procédé selon l'une des revendications précédentes dans lequel le traitement de ladite couche intérieure est un moussage d'au moins la couche intérieure compacte (12, 22) pour obtenir une couche intérieure moussée (13, 23).

4. Procédé de fabrication selon la revendication précédente, comprenant localement le moussage de la totalité de l'épaisseur de ladite pièce (01).

5. Procédé selon la revendication 3, dans lequel on effectue un chauffage d'au moins la couche intérieure moussée (13, 23) pour obtenir une couche intérieure compacte (14, 24) et une couche médiane moussée (15, 25).

6. Procédé de fabrication selon la revendication précédente, dans lequel le chauffage de la ou des couche(s) intérieure(s) moussée(s) (13, 23) est réalisé par l'injection et/ou la circulation d'un gaz chaud, par exemple de l'air, à l'intérieur de ladite carrosserie (01).

7. Procédé de fabrication selon l'une des revendications précédentes, dans lequel la surface moussée sert ensuite de guide au gaz chaud par effet coanda.

8. Procédé de fabrication selon l'une des revendication 6 ou 7, dans lequel des dropbox (30) et/ou des évents (31) sont utilisés pour réaliser les entrées et/ou sorties de gaz chaud.

9. Procédé de fabrication selon l'une des revendications 1 ou 2, dans lequel lors de la micronisation d'une précédente carrosserie, celle-ci est réalisé avec au moins deux spectres de granulométries différentes et introduite dans le moule par une drop box pour réaliser la deuxième couche moussée et une troisième couche.

10. Procédé selon la revendication précédente, dans lequel un premier spectre granulométrique est fin et un deuxième spectre granulométrique est supérieur au premier spectre.

11. Procédé selon la revendication 9 ou 10, dans lequel les particules des deux spectres sont envoyés dans le moule, les particules les plus fines fondent en premier formant une deuxième couche sur la première couche, puis les particules plus grosses viennent adhérer sur la deuxième couche formant une troisième couche.

12. Procédé selon la revendication précédente, dans lequel l'expansion de la seconde couche est réalisée avant le dépôt de la troisième couche en utilisant des agents d'expansion ayant une faible température de déclenchement.

13. Procédé de fabrication selon l'une des revendications 1 ou 2, dans lequel au recyclage d'une coque précédente, on effectue un broyage, une reformulation, puis une micronisation dans laquelle sont intégrées des charges nanométriques type nano tubes, graphène améliorant les caractéristiques mécaniques de la deuxième couche moussée et de la troisième couche.

14. Procédé selon l'une des revendications précédentes, dans lequel on forme lors du rotomoulage un plot sur la couche extérieure compacte, ledit plot ou kiss off permettant un recollement des matières lors du traitement de ladite couche intérieure.

15. Pièce réalisée par un procédé de fabrication selon l'une des revendications précédentes, ladite pièce étant une carrosserie de véhicule ou une partie de ladite carrosserie comme par exemple la porte.

16. Pièce (01) selon la revendication précédente, ladite carrosserie étant réalisée en trois couches au niveau des points d'ancrage (03) de ceinture (32), et/ou du pilier A (04), et/ou du pilier C (05).

17. Pièce selon l'une des revendications 14 à 16, ladite pièce comprenant au moins un plot (33) de recollement de matière.

18. Pièce selon l'une des revendications 14 à 17, ladite pièce étant une porte, un battant, un siège ou un capot et étant réalisée en trois couches.

19. Véhicule comprenant une pièce ou une carrosserie selon l'une des revendications précédentes 14 à 18.

20. Véhicule selon la revendication précédentes, dans lequel des points d'ancrage des ceintures de sécurité sont situés au centre du pavillon, côté intérieur du véhicule.
